# EUROPEAN PATENT APPLICATION

(11) **EP 2 469 907 A1**
(43) Date of publication of application: **27.06.2012**
(21) Application number: 10809740.3
(22) Date of filing: 19.08.2010
(51) Int. Cl.: H04W 16/14, H04J 11/00, H04W 72/04, H04W 88/04

(54) **WIRELESS COMMUNICATION BASE STATION APPARATUS, SMALL-SCALE WIRELESS COMMUNICATION BASE STATION APPARATUS, WIRELESS COMMUNICATION TERMINAL APPARATUS, RADIO TRANSMITTING METHOD, RADIO RELAYING METHOD, AND RADIO RECEIVING METHOD**

(30) Priority: 19.08.2009 JP 2009189992; 12.01.2010 JP 2010004119
(71) Applicant: Panasonic Corporation, Kadoma-shi Osaka 571-8501 (JP)
(72) Inventor: OHYAMA, Takahiro, Osaka 540-6207 (JP); SUGAWARA, Tomohiro, Osaka 540-6207 (JP)
(74) Representative: Grünecker, Kinkeldey, Stockmair & Schwanhäusser
(86) International application number: PCT/JP2010/005127
(87) International publication number: WO 2011/021394

(57) **Abstract**

A system can suppress the degradation of the system's own throughput, while suppressing the interference with a different communication system sharing a frequency band with the system. In ST302, a base station selects a terminal (B) as a relay station. In ST305, the base station performs a separation between the subcarrier signals outside an FSS-used band and the subcarrier signals within the FSS-used band, and remaps the separated subcarrier signals within the FSS-used band to the subcarriers outside the FSS-used band. In ST306, the separated subcarrier signals outside the FSS-used band and the remapped subcarrier signals outside the FSS-used band are differentially transmitted at the same time. In ST308, the terminal (B) remaps signals received from the base station to the subcarriers within the FSS-used band and, in ST309, transfers those signals as remapped to a terminal (A). In ST310, the terminal (A) combines the signals transferred by the terminal (B) with signals received from the base station for decoding.

## Description

### Technical Field

The present invention relates to a radio communication base station apparatus, a small-scale radio communication base station apparatus, a radio communication terminal apparatus, a radio transmission method, a radio relay method, and a radio reception method capable of reducing interference to a different radio communication system sharing a frequency band.

### Background Art

In the World Radio-communication Conference (WRC-07) held in the end of 2007, a new frequency band was allocated for an IMT-Advanced mobile communication service. In the conference, 100 or more countries in the world stated using a frequency band of 3.4 to 3.6 GHz for the IMT-Advanced service. In effect, this frequency band becomes the international mobile communication frequency.

This frequency band, which is called a C-band, is still utilized for a fixed satellite service (FSS). This frequency band is mainly used as a frequency band for television broadcasting or an emergency frequency band for disasters in the equatorial countries where rain attenuation is severe or the countries with wide territory. In these countries, the FSS is an important communication service. Accordingly, with the IMT-Advanced mobile communication, it is necessary to prevent interference from affecting the FSS when the same frequency as that of the FSS is shared.

To receive signals from FSS satellite stations, an FSS earth station is configured such that directivity faces the upside. The interference to the FSS is smaller in an uplink (UL) through which radio waves are transmitted from an IMT-Advanced mobile station to an IMT-Advanced base station than in a downlink (DL). The smaller an output transmitted by an IMT-Advanced system is, the smaller the interference to the FSS is.

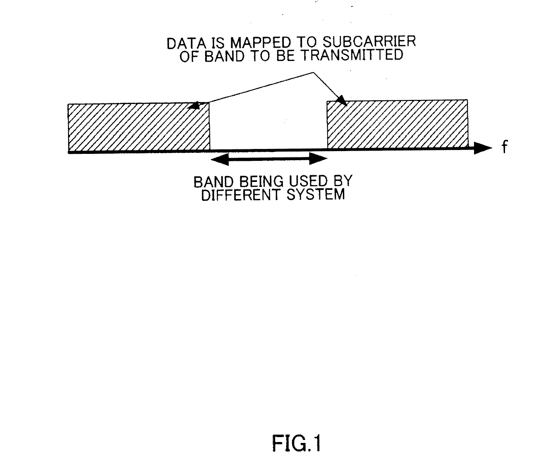

For example, Patent Literature 1 discloses a technique for reducing the interference to a different radio communication system when a radio communication system shares a frequency band with the different radio communication system. Patent Literature 1 discloses a method of preventing the interference from affecting a different system by not mapping data to a subcarrier corresponding to a frequency component being used by the different system when the different system has already used a part of a frequency band which is to be used for communication, as shown in FIG.1.

### Citation List

### Patent Literature

PTL 1
   Japanese Patent No. 2920131

### Summary of Invention

### Technical Problem

However, when the interference is prevented from affecting the FSS according to the technique disclosed in Patent Literature 1, IMT-Advanced data may not be mapped to the subcarrier corresponding to the frequency component being used for the FSS, thereby deteriorating an IMT-Advanced throughput.

An object of the present invention is to provide a radio communication base station apparatus, a small-scale radio communication base station apparatus, a radio communication terminal apparatus, a radio transmission method, a radio relay method, and a radio reception method capable of suppressing deterioration in the throughput of the own communication system while preventing the interference from affecting a different communication system sharing a frequency band.

### Solution to Problem

A radio communication base station apparatus according to the present invention includes: a first mapping section that maps transmission data to a predetermined first frequency band; a separation section that separates the mapped transmission data into first transmission data mapped to a second frequency band used by a different radio communication system and second transmission data mapped to a frequency band other than the second frequency band; a second mapping section that remaps the separated first transmission data to the frequency band other than the second frequency band; and a transmission section that distinguishes the remapped first transmission data from the separated second transmission data and simultaneously transmits the remapped first transmission data and the separated second transmission data.

A radio communication terminal apparatus according to the present invention includes: a transmission control section that receives control information transmitted from a radio communication base station apparatus and switches whether or not the radio communication terminal apparatus operates as a relay station based on the received control information; a mapping section that maps first transmission data, which is transmitted from the radio communication base station apparatus and is used by a different radio communication system and which has been mapped to a frequency band other than a second frequency band, to the second frequency band, when the radio communication terminal apparatus operates as the relay station; a transmission section that transmits the mapped first transmission data; a synthesis section that combines second transmission data transmitted from the radio communication base station apparatus and mapped to a frequency band other than the second frequency band and the first transmission data transmitted by the relay station and mapped to the second frequency band, when the radio communication terminal apparatus does not operate as the relay station; and a decoding section that decodes the combined first and second transmission data.

### Advantageous Effects of Invention

According to the present invention, it is possible to suppress the deterioration in the throughput of a communication system while preventing interference from affecting a different communication system sharing a frequency band.

### Brief Description of Drawings

FIG.1 is a diagram illustrating a data mapping method disclosed in Patent Literature 1;
FIG.2 is a block diagram illustrating the configuration of a transmission section of an IMT-Advanced base station according to Embodiment 1 of the present invention;
FIG.3 is a block diagram illustrating the configuration of an IMT-Advanced terminal according to Embodiment 1 of the present invention;
FIG.4 is a diagram illustrating a communication processing sequence between the base station shown in FIG.2 and the terminal shown in FIG.3;
FIG.5 is a diagram illustrating a subcarrier mapping method;
FIG.6 is a block diagram illustrating another configuration of the transmission section of an IMT-Advanced base station according to Embodiment 1 of the present invention;
FIG.7 is a block diagram illustrating another configuration of the IMT-Advanced terminal according to Embodiment 1 of the present invention;
FIG.8 is a diagram illustrating still another configuration of the IMT-Advanced terminal according to Embodiment 1 of the present invention;
FIG.9 is a schematic diagram illustrating a small-scale base station and a service domain of the small-scale base station;
FIG.10 is a block diagram illustrating the configuration of a transmission section of an IMT-Advanced base station according to Embodiment 2 of the present invention; and
FIG.11 is a block diagram illustrating the configuration of a transmission section of a small-scale base station according to Embodiment 2 of the present invention.

### Description of Embodiments

Now, embodiments of the present invention will be described in detail with reference to the accompanying drawings. Throughout the embodiments, the same reference numerals are given to the constituent elements having the same function and the description thereof will not be repeated.

### (Embodiment 1)

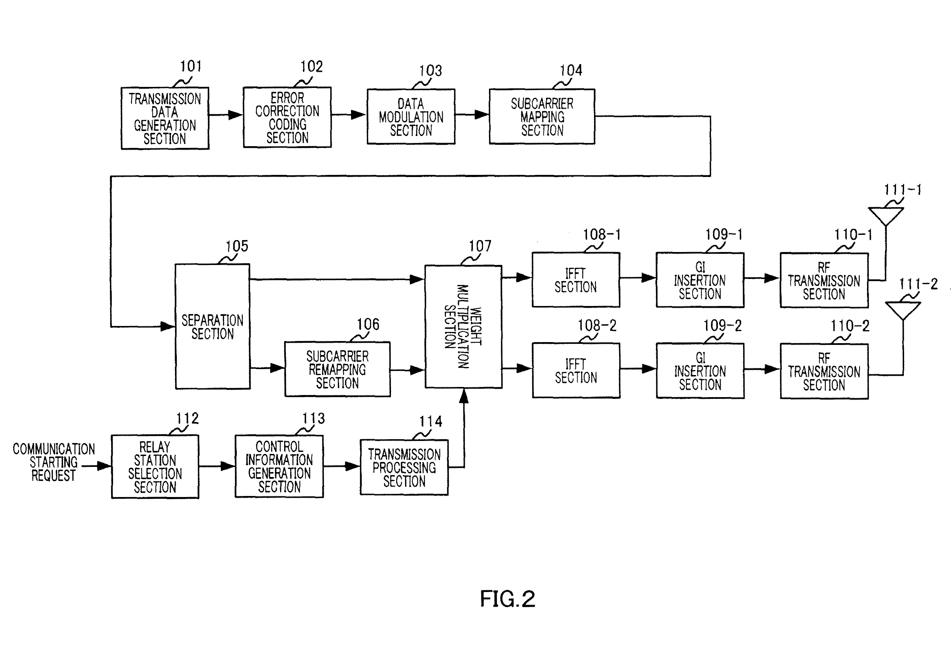

FIG.2 is a block diagram illustrating the configuration of a transmission section of an IMT-Advanced base station (hereinafter, simply referred to as a "base station") according to Embodiment 1 of the present invention. In the drawing, transmission data generation section 101 generates transmission data and outputs the generated transmission data to error correction coding section 102.

Error correction coding section 102 executes error correction coding on the transmission data output from transmission data generation section 101 and outputs the coded data to data modulation section 103.

Data modulation section 103 executes primary modulation on the coded data output from error correction coding section 102 and outputs the modulated data to subcarrier mapping section 104.

Subcarrier mapping section 104 maps the modulated data output from data modulation section 103 to a predetermined subcarrier (first frequency band) and outputs the mapped data as an OFDM signal to separation section 105.

Separation section 105 separates the OFDM signal output from subcarrier mapping section 104 into a subcarrier signal outside an FSS use band and a subcarrier signal inside the FSS use band. The subcarrier signal outside an FSS use band is output to weight multiplication section 107 and the subcarrier signal inside the FSS use band is output to subcarrier remapping section 106.

Subcarrier remapping section 106 remaps the subcarrier signal inside the FSS use band output from separation section 105 to the subcarrier outside the FSS use band and outputs the remapped subcarrier signal to weight multiplication section 107. Here, the remapped subcarrier may overlap the subcarrier signal outside the FSS use band output from separation section 105.

Weight multiplication section 107 multiplies each input signal by a weight for which only the subcarrier signal outside the FSS use band output from separation section 105 is received by a communication partner terminal described below and only a signal output from subcarrier remapping section 106 is received by a terminal serving as a relay station. To calculate the weight, it is necessary to acquire the propagation characteristics from a base station to a communication partner terminal and the propagation characteristics from the base station to a relay station or information regarding the direction of each terminal or the like. Here, it is assumed that the propagation characteristics or the information is already acquired. Weight multiplication section 107 multiplies two input signals by weights corresponding to respective transmitting antennas and combines the multiplied signals to be transmitted by the respective transmitting antennas. Thereafter, the signal to be transmitted from antenna 111-1 is output to IFFT section 108-1 and the signal to be transmitted from antenna 111-2 is output to IFFT section 108-2.

IFFT sections 108-1 and 108-2 execute reverse Fourier transform on the signals output from weight multiplication section 107, respectively, and outputs the signals to guard interval (GI) insertion sections 109-1 and 109-2, respectively.

GI insertion sections 109-1 and 109-2 insert a GI to the transmission data output from IFFT sections 108-1 and 108-2, respectively, and output the transmission data to RF transmission sections 110-1 and 110-2, respectively.

RF transmission sections 110-1 and 110-2 execute predetermined radio transmitting processes, such as a digital-to-analog converting process and an up-converting process to a radio frequency band, on the signals output from GI insertion sections 109-1 and 109-2 and execute radio transmission from antennas 111-1 and 111-2.

When relay station selection section 112 receives a communication starting request from a terminal or attempts to start communication with a terminal, relay station selection section 112 selects a terminal which serves as a relay station. Specifically, for example, relay station selection section 112 selects a terminal which is present inside the same sector as that of a communication partner terminal and is not executing communication. Alternatively, a base station collects information regarding the position of a terminal using a position information acquiring function (positioning function such as a GPS function) and selects a terminal which is the closest to the communication partner terminal and is not executing communication. Information indicating the selected terminal is output to control information generation section 113.

Control information generation section 113 generates control information including information regarding the selection of the relay station communicating with the communication partner terminal and information (information indicating that the signal is mapped from which subcarrier to which subcarrier or resource information such as a radio frequency or a time used for transmission) necessary for the relay, based on the information output from relay station selection section 112, to transmit the control information to the terminal selected as the relay station. Further, control information generation section 113 generates control information including information regarding start of the communication via the terminal selected as the relay station and information regarding delay occurring in the relay to transmit the control information to the communication partner terminal. Each of the generated control information is output to transmission processing section 114.

Transmission processing section 114 executes transmission processes, such as error correction coding, primary modulation on data, and subcarrier mapping, on the signal output from control information generation section 113. Then, transmission processing section 114 transmits the signal subjected to the transmission process to each terminal via weight multiplication section 107. Here, when the control information is transmitted, it is assumed that the subcarrier outside an FSS use band is used. When the control information to be transmitted to each terminal may arrive to both terminals (for example, common control information to the terminals), the control information may be input directly to IFFT section 108-1 without transmission to weight multiplication section 107 and may be transmitted via single antenna 111-1.

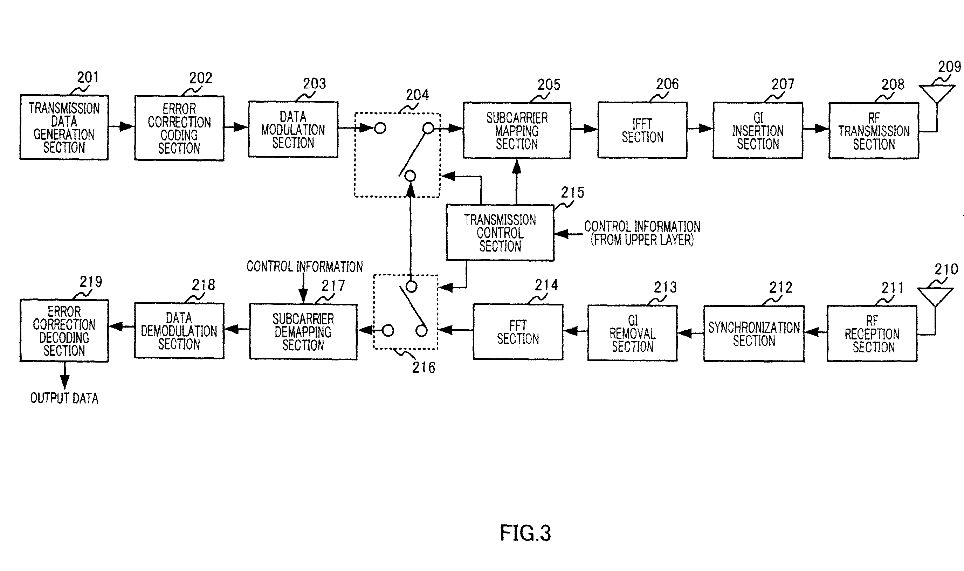

FIG.3 is a block diagram illustrating the configuration of an IMT-Advanced terminal (hereinafter, simply referred to as a "terminal") according to Embodiment 1 of the present invention. In the drawing, transmission data generation section 201 generates transmission data and outputs the transmission data to error correction coding section 202.

Error correction coding section 202 executes error correction coding on the transmission data output from transmission data generation section 201 and outputs the coded data to data modulation section 203.

Data modulation section 203 executes primary modulation on the coded data output from error correction coding section 202 and outputs the modulated data to first switch section 204.

Under the control of transmission control section 215 described below, first switch section 204 connects data modulation section 203 to subcarrier mapping section 205 or connects FFT section 214 to subcarrier mapping section 205 via second switch section 216.

Under the control of transmission control section 215 described below, subcarrier mapping section 205 maps the signal output from first switch section 204 to a subcarrier and outputs the signal to IFFT section 206.

IFFT section 206 executes reverse Fourier transform on the signal output from subcarrier mapping section 205 and outputs the signal to GI insertion section 207.

GI insertion section 207 inserts a GI to the transmission data output from IFFT section 206 and outputs the transmission data to RF transmission section 208.

RF transmission section 208 executes predetermined radio transmitting processes, such as a digital-to-analog converting process and an up-converting process to a radio frequency band, on the signals and executes radio transmission from antenna 209.

RF reception section 211 receives the signal transmitted from the base station via antenna 210, executes predetermined radio receiving processes, such as an analog-to-digital converting process and a down-converting process to a baseband, on the signal, and outputs the processed signal to synchronization section 212.

Synchronization section 212 synchronizes timing for executing an FFT process on the received signal output from RF reception section 211 and outputs the received signal synchronized in the timing to GI removal section 213.

GI removal section 213 removes the GI at the synchronization timing from the received signal output from synchronization section 212 and outputs the data, from which the GI is removed, to FFT section 214.

FFT section 214 executes Fourier transform on the data output from GI removal section 213 and outputs the processed data to second switch section 216.

When the terminal operates as a relay station, transmission control section 215 controls first switch section 204 and second switch section 216 such that second switch section 216 connects FFT section 214 to subcarrier mapping section 205 and controls subcarrier mapping section 205 such that subcarrier mapping section 205 remaps the data from FFT section 214 to the subcarrier inside the FFS use band based on the control information transmitted from the base station. On the contrary, when the terminal does not operate as the relay station, transmission control section 215 controls first switch section 204 such that first switch section 204 connects data modulation section 203 to subcarrier mapping section 205 and controls second switch section 216 such that second switch section 216 connects FFT section 214 to subcarrier demapping section 217 based on the control information transmitted from the base station.

Under the control of transmission control section 215, second switch section 216 connects FFT section 214 to subcarrier demapping section 217 or connects FFT section 214 to subcarrier mapping section 205 via first switch section 204.

Subcarrier demapping section 217 executes parallel-to-serial conversion on the signal output from second switch section 216 and outputs the processed signal to data demodulation section 218. Here, when the control information transmitted from the base station is input from an upper layer (not shown), subcarrier demapping section 217 temporarily stores the signal output from second switch section 216 and directly arriving from the base station, executes a time matching process and a synthesizing process on the stored signal and the signal output from second switch section 216 and arriving from the relay station, and executes parallel-to-serial conversion based on information, which is included in the control information, regarding the delay occurring in the relay. Here, the directly arriving signal refers to a signal which is transmitted from the base station and is received without passing through the relay station. The signal directly arriving from the base station and the signal arriving from the relay station are distinguished from each other by determining whether the signal is the subcarrier signal inside the FSS use band. Here, since a communication scheme such as the OFDM of using the FFT or the DFT is supposed to be used, the delay occurring in the relay is an integer multiple of a time unit at which the DFT or the FFT such as an OFDM symbol is executed.

Data demodulation section 218 demodulates the signal output from subcarrier demapping section 217 and outputs the demodulated signal to error correction decoding section 219. The synthesizing process of executing the time matching process on the signal directly arriving from the base station and the signal arriving from the relay station may be executed on the signal demodulated by data demodulation section 218.

Error correction decoding section 219 executes error correction decoding on the signal output from data demodulation section 218.

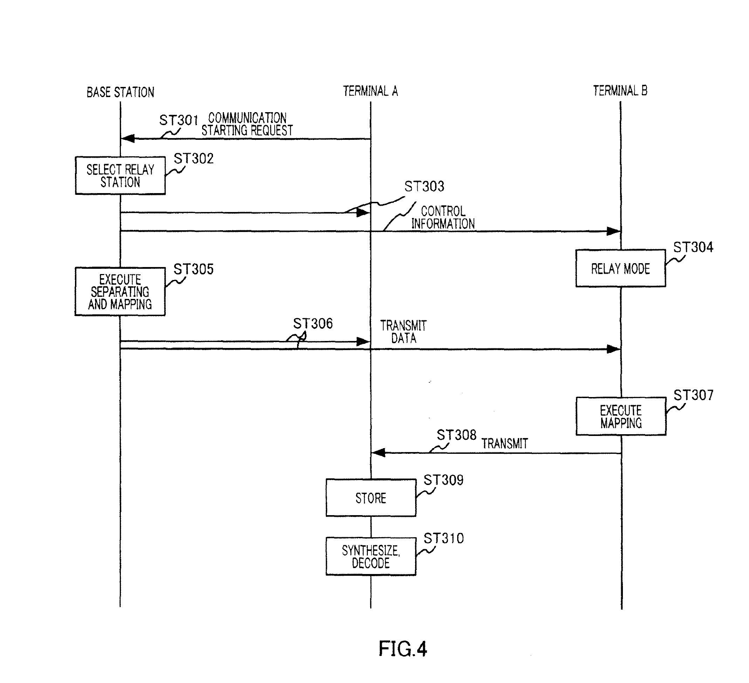

Next, referring to FIG.4, a communication processing sequence will be described when there are a plurality of terminals under a base station and a terminal communicating with the base station is referred to as terminal A and a terminal relaying communication with terminal A is referred to as terminal B. In FIG.4, in ST301, terminal A that attempts to communicate with the base station gives a communication starting request to the base station. Here, when the base station attempts to communicate with terminal A, this process is substituted by a process of replying a communication request from the base station. In ST302, when the base station receives the communication starting request (or response) from terminal A, relay station selection section 112 selects a relay station. Here, terminal B, which is located near terminal A (for example, within the same sector as that of terminal A) and is not executing communication, is selected as the relay station.

In ST304, the base station transmits to terminal A control information including information regarding start of the communication via terminal B selected as the relay station and information regarding delay occurring in the relay, and transmits to terminal B control information including information regarding the selection of the relay station communicating with terminal A and information (information indicating that the signal is mapped from which subcarrier to which subcarrier).

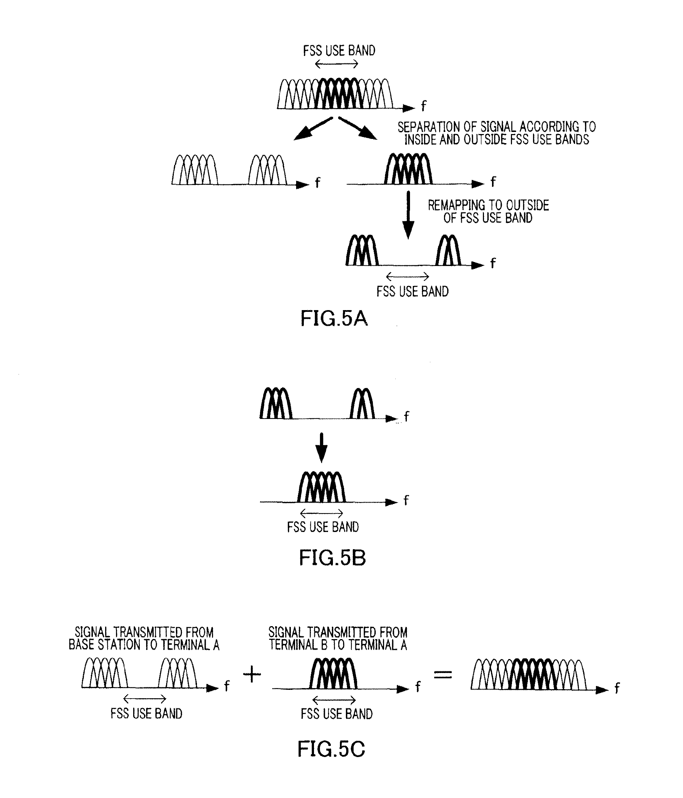

In ST304, transmission control section 215 of terminal B switches a mode to a relay mode and executes a setting process of relaying a signal which is transmitted from the base station and is to be transmitted to terminal A. In ST305, as shown in FIG.5A, the separation section 105 of the base station separates the signal into the subcarrier signal outside the FFS use band and the subcarrier signal inside the FSS use band and subcarrier remapping section 106 remaps the separated subcarrier signal inside the FFS use band to the subcarrier outside the FFS use band.

In ST306, the subcarrier signal outside the FSS use band separated in ST305 and the signal remapped in ST305 are simultaneously transmitted. Here, since the signal transmitted from the base station does not include the frequency component inside the FSS use band, it is possible to prevent interference from affecting an FSS earth station.

In ST307, as shown in FIG.5B, subcarrier mapping section 205 of terminal B remaps the signal transmitted from the base station to terminal B to the subcarrier inside the FFS use band and transmits the remapped signal to terminal A in ST308. The radio frequency used for the transmission is the same as that of the signal transmitted from the base station to terminal A. Here, the signal transmitted from terminal B to terminal A includes a frequency component inside the FSS use band. However, the transmission from terminal B is the same as the uplink transmission and there is substantially no interference in the FSS earth station configured such that directivity faces the upside. Further, since terminal A is located near terminal B, the output of terminal B may be small. Thus, the interference to the FSS earth station can be further reduced.

By the processing given above, as shown in FIG.5C, the signal transmitted from the base station to terminal A and the signal transmitted from terminal B to terminal A are combined, and the combined signal is received at the antenna of terminal A.

In ST309, subcarrier demapping section 217 of terminal A temporarily stores the signal transmitted from the base station.

In ST310, subcarrier demapping section 217 of terminal A combines the signal transmitted from terminal B and the signal stored in ST309 (synchronizes a delay time caused in the relay), and then data demodulation section 218 and error correction decoding section 219 decode the combined signal.

Although not shown in the drawing, before the communication starts, it is necessary to execute a process of acquiring information regarding the position of each terminal, a process of estimating the propagation characteristics from the base station to each terminal, or a process of estimating the direction of each terminal.

Since the communication can be realized using the entire band including the FSS use band while preventing the interference from affecting the FSS by executing the above-described communication processing sequence, it is possible to suppress the deterioration in the throughput. Further, the frequency can be shared only through the process executed on the IMT side without executing a process on the FSS side.

To appropriately combine the signal directly arriving from the base station and the signal arriving from terminal B serving as the relay station in terminal A, the system may be designed such that the delay occurring in the relay process in terminal B may be inserted into the GI. In this case, it is not necessary to execute the synthesizing process in consideration of the delay occurring in the relay. Further, the signal arriving from terminal B is configured to be normally delayed only by n×OFDM symbol (where n is a positive integer) compared to the signal directly arriving from the base station and is received by terminal A.

According to Embodiment 1, the base station separates the signal into the subcarrier signal outside the FSS use band and the subcarrier signal inside the FSS use band, remaps the separated subcarrier signal inside the FSS use band to the subcarrier outside the FSS use band, transmits the separated subcarrier signal outside the FSS use band to a first terminal which is a communication partner, transmits the remapped subcarrier signal outside the FSS use band to a second terminal selected as the relay station, transmits the remapped subcarrier signal outside the FSS use band to the second terminal selected as the relay station, remaps the subcarrier signal received by the second terminal to the inside of the FSS band, transmits the subcarrier signal remapped to the inside of the FSS band to the first terminal, combines the signal transmitted from the first terminal to the second terminal and the signal directly transmitted from the base station, and decodes the combined signal. In this way, since the communication can be realized using the FSS use band while preventing the interference from affecting the FSS, it is possible to suppress the deterioration in the throughput.

In this embodiment, subcarrier demapping section 217 of the terminal serves as the synthesis section that combines the signal directly arriving from the base station and the signal arriving from the relay station. However, data demodulation section 218 may serve as the synthesis section.

In this embodiment, when the signals are simultaneously transmitted from the base station to terminal A (the first terminal) and terminal B (the second terminal), the signals are spatially separated and transmitted. However, the signals may not be spatially separated in the base station, but may be transmitted as a separate stream of MIMO.

When the signals are simultaneously transmitted from the base station to terminal A (the first terminal) to terminal B (the second terminal), the signals may be transmitted using different radio frequencies. In this case, when the radio signal transmitted to terminal B (the second terminal) does not include the frequency component of the FSS use band, subcarrier remapping section 106 does not remap the subcarrier signal. Here, the signals up-converted to the two different radio frequencies may be simultaneously transmitted to terminal A (the first terminal) intentionally without passing through the relay station. However, RF reception sections need to be prepared by two radio frequencies in order for terminal A to demodulate the signals. It is not preferable that the terminal includes the plurality of RF reception sections since the cost of the terminal is increased and the power consumption is increased. Therefore, the same radio frequency as that used to transmit the signal from terminal B (the second terminal) to terminal A (the first terminal) may be used to transmit the signal from terminal B (the second terminal) to terminal A (the first terminal) using a radio frequency separated from the radio frequency of the signal transmitted from the base station to terminal B (the second terminal) and the radio frequency of the signal transmitted from the base station to terminal A (the first terminal). In this way, the cost of the terminal can be reduced and the power consumption can be reduced.

As several methods have been described, the separated subcarrier signal outside the FSS use band and the remapped subcarrier signal outside the FSS use band may be simultaneously transmitted so as to be distinguished from each other.

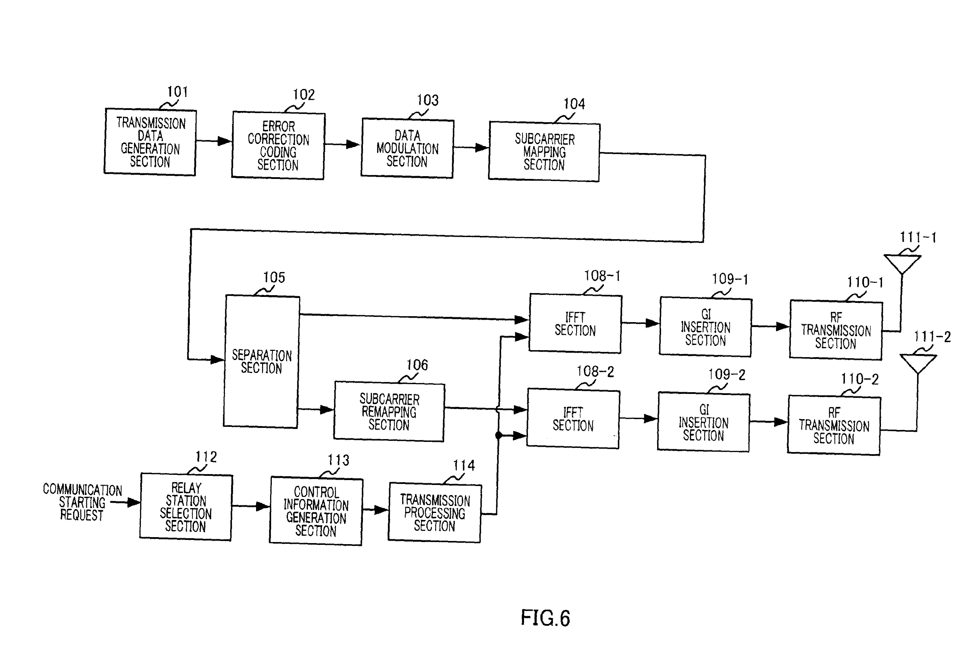

In this embodiment, the transmission section of the base station has the configuration shown in FIG.2, but may have a configuration shown in FIG.6. In the configuration shown in FIG.6, the base station does not spatially separate the transmission signal to be transmitted to terminal A and the transmission signal to be transmitted to terminal B, but transmits the signal by MIMO.

Here, the radio frequencies of two RF transmission sections are the same as each other. The transmission signal to be transmitted to terminal A and the transmission signal to be transmitted to terminal B are transmitted from different antennas. As a consequence, each terminal receives the signal where the transmission signal to be transmitted to terminal A and the transmission signal to be transmitted to terminal B coexist. Therefore, it is necessary to provide two or more antennas and execute a predetermined separating process of separating extracting only the signal for the own terminal. Further, when information to be transmitted to each terminal may arrive to both terminals (for example, when control information common to the terminals is transmitted), a common control information signal may be input to IFFT section 108-1 and may be transmitted using single antenna 111-1.

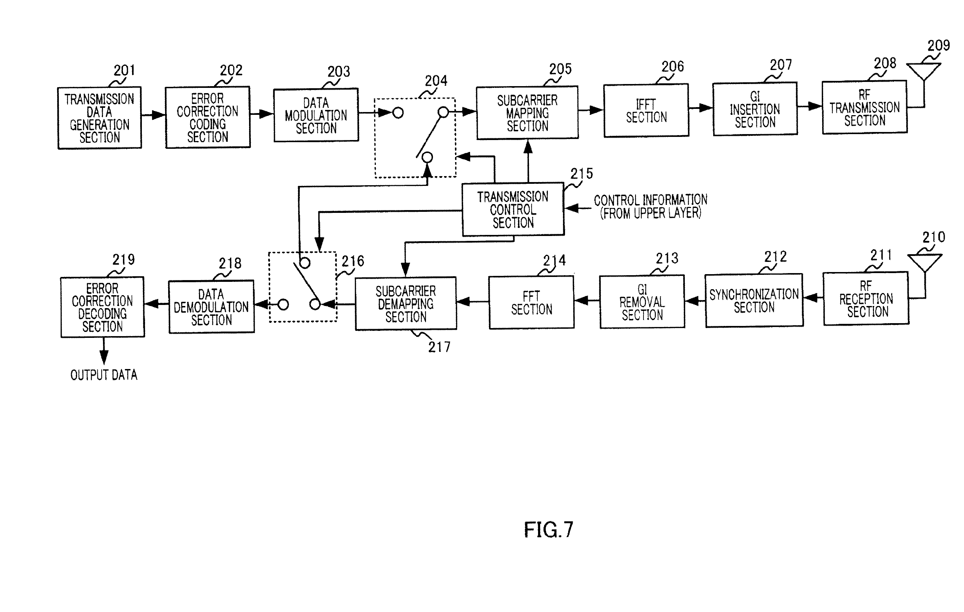

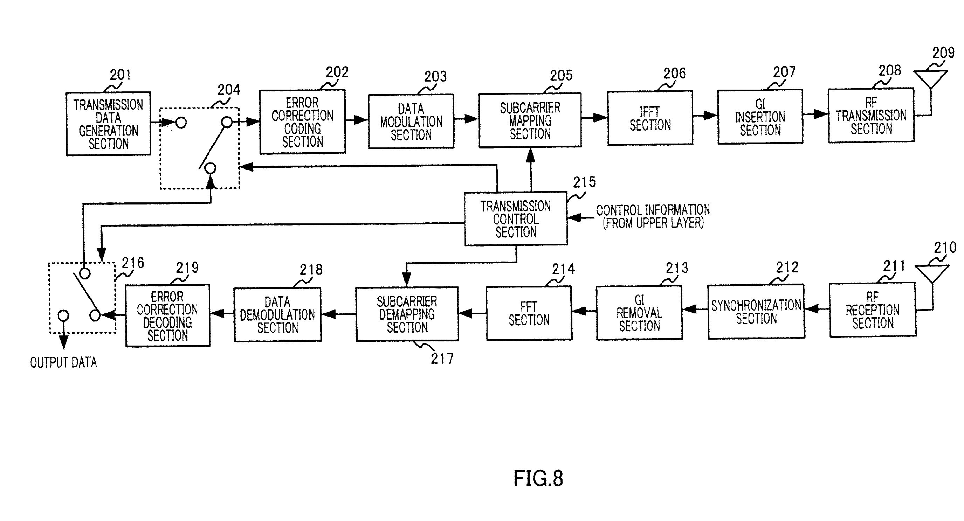

In this embodiment, the terminal has the configuration shown in FIG.3, but may have a configuration shown in FIG.7 or 8. In the configuration shown in FIG.7, when the terminal operates as the relay station, transmission control section 215 controls first switch section 204 and second switch section 216 such that the output of subcarrier demapping section 217 is input to subcarrier mapping section 205. Transmission control section 215 controls subcarrier demapping section 217 such that subcarrier demapping section 217 extracts the data mapped only to a specific subcarrier outside the FSS use band. Further, transmission control section 215 controls subcarrier mapping section 205 such that subcarrier mapping section 205 maps the input data to the subcarrier inside the FSS use band.

On the contrary, when the terminal does not operate as the relay station, transmission control section 215 controls second switch section 216 such that the output of subcarrier demapping section 217 is input to data demodulation section 218. Further, transmission control section 215 controls first switch section 204 such that the output of data modulation section 203 is input to subcarrier mapping section 205.

In the configuration shown in FIG.8, when the terminal operates as the relay station, transmission control section 215 controls first switch section 204 and second switch section 216 such that the output of error correction decoding section 219 is input to error correction coding section 202. Transmission control section 215 controls subcarrier demapping section 217 such that subcarrier demapping section 217 extracts the data mapped only to a specific subcarrier outside the FSS use band. Further, transmission control section 215 controls subcarrier mapping section 205 such that subcarrier mapping section 205 maps the input data to the subcarrier inside the FSS use band.

On the contrary, when the terminal does not operate as the relay station, transmission control section 215 controls first switch section 204 such that the output of transmission data generation section 201 is input to error correction coding section 202. Further, transmission control section 215 controls second switch section 216 such that the output of error correction decoding section 219 becomes output data.

### (Embodiment 2)

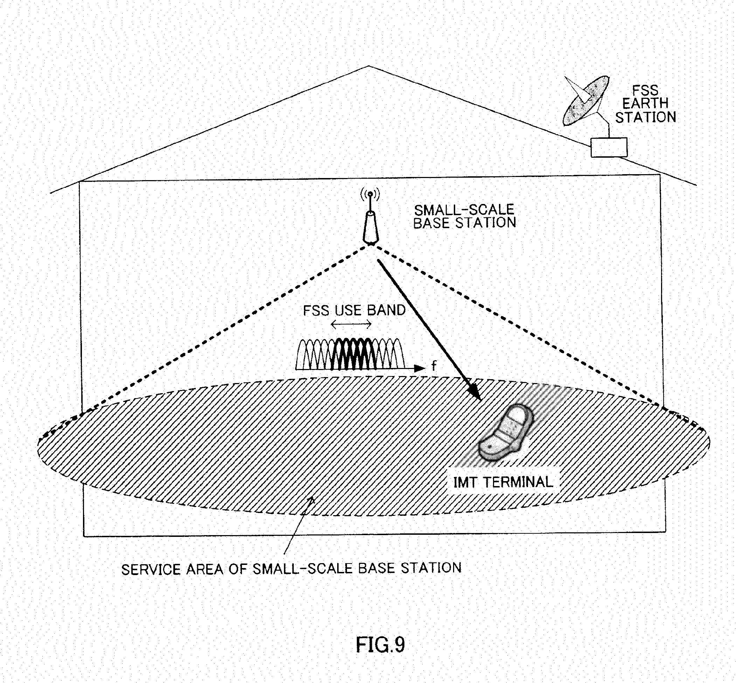

In Embodiment 2 of the present invention, the case has hitherto been described in which a very small-scale base station with a coverage area of several meters to several tens of meters is installed in a household or the like. Here, the small-scale base station refers to a base station that realizes a pico cell, a femto cell, a small-scale cell such as Home eNode B or a Rely Node which has a cell radius and is installed in a spot manner in a building, a moving object (vehicle), or a large-scale cell. The coverage area (small-scale cell) of a small-scale base station is very small, as shown in FIG.9. Therefore, even when the FSS use band is used in DL in the small-scale cell, there is substantially no interference to the FSS earth station and all system bands can be used. That is, it is not necessary to use the relay scheme described in Embodiment 1.

Hereinafter, a case will be described in which the terminal being executing communication by the relay scheme (hereinafter, simply referred to as a "relay scheme") described in Embodiment 1 executes soft handover to a small-scale cell out of the area of the small-scale cell or executes soft handover to a different IMT-Advanced base station executing the relay scheme from the small-scale cell. The terminal being executing the communication by the relay scheme receives the signal of the FSS use band passing through the terminal operating as the relay station. This signal is delayed by the n×OFDM symbol compared to the signal directly arriving from the IMT-Advanced base station, when the signal arrives to the terminal. When the terminal executes the soft handover, the IMT-Advanced base station and the small-scale base station synchronize with each other. Therefore, the signal of the FSS use band passing through the terminal operating as the relay station is delayed by the n×OFDM symbol compared to the signal directly arriving from the base station, when the signal arrives. For this reason, when soft handover is executed between the small-scale cell and the cell using the relay scheme, it is necessary to efficiently process the signal inside the FSS use band which is delayed by the n×OFDM symbol when the signal arrives to the terminal.

A terminal according to Embodiment 2 of the present invention has the same configuration shown in FIG.3, 7, or 8 of Embodiment 1. The configuration will be described with reference to, for example, FIG.3. In FIG.3, subcarrier demapping section 217 receives the control information transmitted by the IMT-Advanced base station or the small-scale base station from an upper layer (not shown).

When the received control information indicates that the relay scheme is not applied, subcarrier demapping section 217 executes parallel-to-serial conversion on the signal output from FFT section 214 via second switch section 216 and outputs the processed signal to data demodulation section 218 without delaying the signal. On the contrary, when the received control information indicates that the relay scheme is not applied or indicates an instruction to execute the handover to the IMT-Advanced base station using the relay scheme, subcarrier demapping section 217 adds a delay amount (n×OFDM symbol) occurring in the relay to the signal outside the FSS use band in the signal output from FFT section 214 via second switch section 216, executes parallel-to-serial conversion, and outputs the processed signal to data demodulation section 218.

Further, when the control information transmitted by the IMT-Advanced base station or the small-scale base station indicates application of the relay scheme or indicates the handover to the IMT-Advanced base station using the relay scheme, the control information may indicate that the transmission data mapped to the FSS use band is remapped to a band other than the FSS use band.

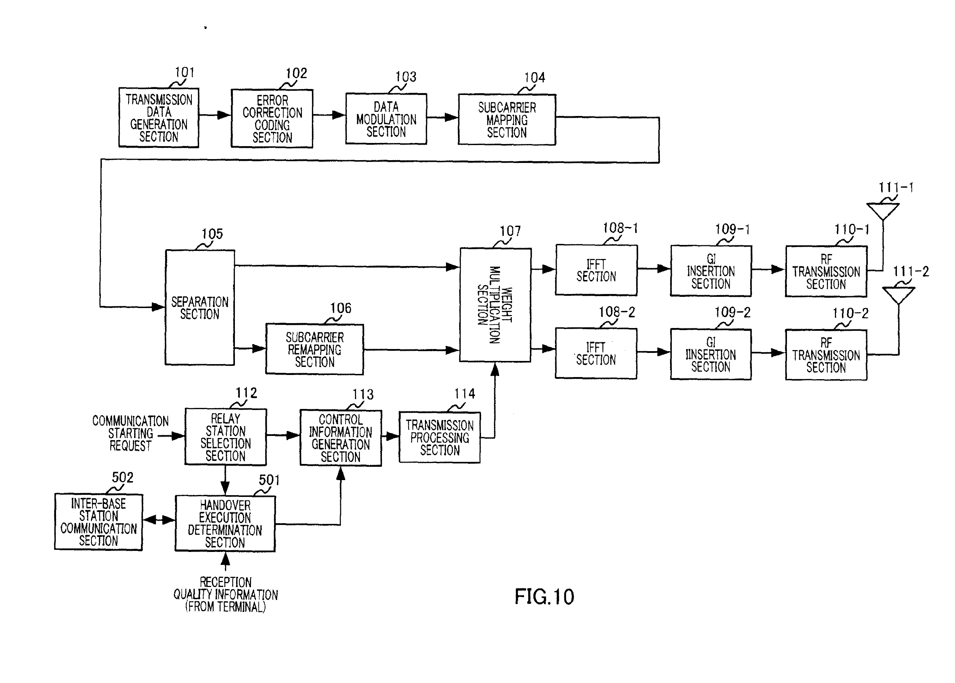

FIG.10 is a block diagram illustrating the configuration of the transmission section of the IMT-Advanced base station according to Embodiment 2 of the present invention. FIG.10 is different from FIG.2 in that handover execution determination section 501 and inter-base station communication section 502 are further provided.

Handover execution determination section 501 acquires information regarding the reception qualities of the own cell and a peripheral cell transmitted from the terminal and determines whether the handover of the terminal is executed based on the acquired information regarding the reception qualities. When handover execution determination section 501 determines that the handover is executed, handover execution determination section 501 determines a cell to which the terminal executes the handover. When handover execution determination section 501 determines that the handover is executed, handover execution determination section 501 reports a handover destination cell to inter-base station communication section 502 and control information generation section 113. At this time, when the terminal selected as the relay station is reported from relay station selection section 112, handover execution determination section 501 also reports application of the relay scheme to inter-base station communication section 502 of. Here, the information regarding the reception quality acquired from the terminal may be reported to a different base station apparatus or a different base station control apparatus (not shown), and then the different base station apparatus or the different base station control apparatus may determine whether the handover is executed and may determine a handover destination. In this case, the different base station apparatus or the different base station control apparatus reports to the base stations the handover destination and the handover source of the intention via inter-base station communication section 502.

Further, when inter-base station communication section 502 reports to handover execution determination section 501 the fact that a terminal executing the handover from another cell is present, handover execution determination section 501 reports to inter-base station communication section 502 the fact that the relay scheme is applied.

Control information generation section 113 generates control information used to report to the terminal the handover destination cell reported from hanover execution determination section 501.

Inter-base station communication section 502 reports to the handover destination base station the handover destination cell connected to the different IMT-Advanced base station and the different small-scale base station and reported from handover execution determination section 501 and the fact that the relay scheme is applied. When it is reported to inter-base station communication section 502 the fact that there is a terminal executing the handover from a connected different IMT-Advanced base station or a connected different small-scale base station, inter-base station communication section 502 reports the intention to handover execution determination section 501. As a consequence, when the fact that the relay scheme is applied is reported from handover execution determination section 501, the intention is reported to the IMT-Advanced base station or the small-scale base station of the handover source.

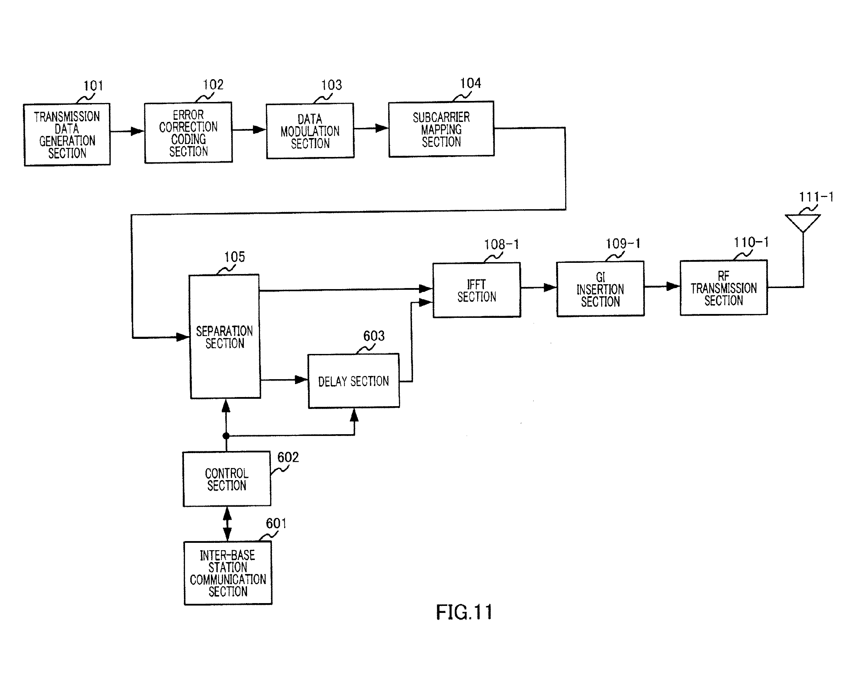

FIG.11 is a block diagram illustrating the configuration of the transmission section of the small-scale base station according to Embodiment 2 of the present invention. FIG.11 is different from FIG.2 in that there are provided inter-base station communication section 601, control section 602, and delay section 603 and there are not provided subcarrier remapping section 106, weight multiplication section 107, IFFT section 108-2, GI insertion section 109-2, RF transmission section 110-2, relay station selection section 112, control information generation section 113, and transmission processing section 114.

When it is reported to inter-base station communication section 601 the fact that there is a terminal connected to the IMT-Advanced base station and executing the handover from the connected IMT-Advanced base station and the terminal applies the relay scheme, inter-base station communication section 601 reports the intention to control section 602. Further, when control section 602 reports to inter-base station communication section 601 the fact that there is a terminal executing the handover to the connected IMT-Advanced base station, inter-base station communication section 601 reports the intention to the connected IMT-Advanced base station. As a consequence, when the fact that the relay scheme is applied is reported from the IMT-Advanced base station, the intention is reported to control section 602.

When inter-base station communication section 601 reports to control section 602 the fact that a base station of the handover partner applies the relay scheme, control section 602 allows separation section 105 to separate the OFDM signal output from subcarrier mapping section 104 into the subcarrier signal outside the FSS use band and the subcarrier signal inside the FSS use band and outputs the separated subcarrier signal inside the FSS use band to delay section 603. Further, control section 602 controls delay section 603 such that delay section 603 delays the subcarrier signal inside the FSS use band output from separation section 105 by the delay amount (n×OFDM symbol) occurring in the relay. IFFT section 108-1 combines the subcarrier signal outside the FSS use band containing no delay and the subcarrier signal inside the FSS use band containing delay and executes reverse Fourier transform.

On the other hand, when inter-base station communication section 601 does not report to control section 602 the fact that a base station of the handover partner applies the relay scheme, control section 602 allows separation section 105 not to separate the OFDM signal output from subcarrier mapping section 104 and outputs the OFDM signal only to IFFT section 108-1.

According to Embodiment 2, when the soft handover is executed between the IMT-Advanced base station and the small-scale base station using the relay scheme, the small-scale base station delays and transmits the subcarrier signal inside the FSS use band by the delay amount (n×OFDM symbol) occurring in the relay. Thus, the terminal executing the soft handover can synchronize with the subcarrier signal inside the FSS use band passing through the terminal operating as the relay station and can receive the subcarrier signal inside the FSS use band from the small-scale base station.

In the above-described embodiments, the common frequency is shared between the IMT-Advanced system and the FSS system. However, the present invention is not limited to the systems. When a communication system shares a frequency with a different communication system, the frequency used by the different communication system is not included in a signal which is widely transmitted as in DL of a cellular system, thereby preventing interference according to the present invention. In relay transmission, the frequency used by the different communication system is used. However, when the communication system is close to a relay terminal being communicating with the relay terminal, the transmission output at the relay time may be small. Therefore, the interference to the different system can be reduced.

The disclosures of Japanese Patent Application No. 2009-189992 filed on August 19, 2009, and Japanese Patent Application No. 2010-004119 filed on January 12, 2010, including the specifications, drawings and abstracts, are incorporated herein by reference in their entirety.

### Industrial Applicability

The radio communication base station apparatus, the small-scale radio communication base station apparatus, the radio communication terminal apparatus, the radio transmission method, the radio relay method, and the radio reception method according to the present invention are applicable to a case where a frequency needs to be shared with a different radio communication system such as an IMT-Advanced system.

### Reference Signs List

101, 201 Transmission data generation section
102, 202 Error correction coding section
103, 203 Data modulation section
104, 205 Subcarrier mapping section
105 Separation section
106 Subcarrier remapping section
107 Weight multiplication section
108-1, 108-2, 206 IFFT section
109-1, 109-2, 207 GI insertion section
110-1, 110-2, 208 RF transmission section
111-1, 111-2, 209, 210 Antenna
112 Relay station selection section
113 Control information generation section
114 Transmission processing section
204 First switch section
211 RF reception section
212 Synchronization section
213 GI removal section
214 FFT section
215 Transmission control section
216 Second switch section
217 Subcarrier demapping section
218 Data demodulation section
219 Error correction decoding section
401 Weight multiplication section
501 Handover execution determination section
502, 601 Inter-base station communication section
602 Control section
603 Delay section

## Claims

1. A radio communication base station apparatus comprising:
a first mapping section that maps transmission data to a predetermined first frequency band;
a separation section that separates the mapped transmission data into first transmission data mapped to a second frequency band used by a different radio communication system and second transmission data mapped to a frequency band other than the second frequency band;
a second mapping section that remaps the separated first transmission data to the frequency band other than the second frequency band; and
a transmission section that distinguishes the remapped first transmission data from the separated second transmission data and simultaneously transmits the remapped first transmission data and the separated second transmission data.

2. The radio communication base station apparatus according to claim 1, further comprising:
a determination section that determines whether or not a radio communication terminal apparatus being communicating with the radio communication base station apparatus executes handover with a small-scale radio communication base station apparatus with a small cell radius; and
a control information generation section that generates control information indicating that the first transmission data having been mapped to the second frequency band is remapped to the frequency band other than the second frequency band to transmit the control information to the small-scale radio communication base station apparatus which is a communication partner of the handover, when the determination section determines that the radio communication terminal apparatus executes the handover.

3. A small-scale radio communication base station apparatus comprising:
a first mapping section that maps transmission data to a predetermined first frequency band, when a radio communication base station apparatus of a communication partner with which a radio communication terminal apparatus being communicating with the small-scale radio communication base station apparatus executes handover remaps first transmission data, which has been mapped to a second frequency band used by a different radio communication system in the transmission data mapped to the first frequency band, to a frequency band other than the second frequency band and transmits the remapped first transmission data;
a separation section that separates the mapped transmission data into the first data mapped to the second frequency band used by the different radio communication system and second transmission data mapped to the frequency band other than the second frequency band; and
a transmission section that delays the separated first transmission data by a predetermined time during the handover with the radio communication base station apparatus and simultaneously transmits the delayed first transmission data and the separated second transmission data.

4. The small-scale radio communication base station apparatus according to claim 3, further comprising:
a control information generation section that generates control information indicating that the separated first transmission data is delayed by the predetermined time to transmit the control information to the radio communication terminal apparatus executing the handover, when the handover destination radio communication base station apparatus remaps the first transmission data, which has been mapped to the second frequency band used by the different radio communication system in the transmission data mapped to the predetermined first frequency band, to the frequency band other than the second frequency band and transmits the remapped first transmission data.

5. A radio communication terminal apparatus comprising:
a transmission control section that receives control information transmitted from a radio communication base station apparatus and switches whether or not the radio communication terminal apparatus operates as a relay station based on the received control information;
a mapping section that maps first transmission data, which is transmitted from the radio communication base station apparatus and which has been mapped to a frequency band other than a second frequency band used by a different radio communication system, to the second frequency band, when the radio communication terminal apparatus operates as the relay station;
a transmission section that transmits the mapped first transmission data;
a synthesis section that combines second transmission data transmitted from the radio communication base station apparatus and mapped to a frequency band other than the second frequency band and the first transmission data transmitted by the relay station and mapped to the second frequency band, when the radio communication terminal apparatus does not operate as the relay station; and
a decoding section that decodes the combined first and second transmission data.

6. A radio transmission method comprising:
a first mapping step that maps transmission data to a predetermined first frequency band;
a separating step that separates the mapped transmission data into first transmission data mapped to a second frequency band used by a different radio communication system and second transmission data mapped to a frequency band other than the second frequency band;
a second mapping step that maps the separated first transmission data to a frequency band other than the second frequency band; and
a transmitting step that distinguishes the remapped first transmission data from the separated second transmission data and simultaneously transmits the remapped first transmission data and the separated second transmission data.

7. A radio relay method comprising:
mapping first transmission data, which is transmitted from a radio communication base station apparatus and which is mapped to a frequency band other than a second frequency band used by a different radio communication system, to the second frequency band; and
transmitting the mapped first transmission data.

8. A radio reception method comprising:
synthesizing second transmission data transmitted from a radio communication base station apparatus and mapped to a frequency band other than a second frequency band used by a different radio communication system and first transmission data transmitted by a relay station and mapped to the second frequency band; and
decoding the combined first and second transmission data.
